# EUROPEAN PATENT SPECIFICATION

(11) **EP 2 364 227 B1**
(45) Date of publication and mention of the grant of the patent: **16.11.2016**
(21) Application number: 09771599.9
(22) Date of filing: 30.11.2009
(51) Int. Cl.: B09B 1/00

(54) **METHOD FOR STIMULATING THE BIODEGRADATION AND THE DEGASSING OF WASTE DISPOSAL SITES**
VERFAHREN ZUM STIMULIEREN VON BIOLOGISCHEM ABBAU UND ENTGASUNG VON MÜLLDEPONIEN
PROCÉDÉ POUR STIMULER LA BIODÉGRADATION ET LE DÉGAZAGE DE SITES DE DÉPÔT DE DÉCHETS

(30) Priority: 03.12.2008 NL 1036270
(43) Date of publication of application: 14.09.2011
(73) Proprietor: Trisoplast International B.V., 5334 LK Velddriel (NL); COFRA B.V., 1042 AG Amsterdam (NL)
(72) Inventor: WAMMES, Jacobus, Cornelis, NL-5334 JR Velddriel (NL); VAN EIJK, Johannes, Kasper, 1241 LJ Kortenhoef (NL)
(74) Representative: Algemeen Octrooi- en Merkenbureau B.V.
(86) International application number: PCT/NL2009/000239
(87) International publication number: WO 2010/068087

(56) References cited:
- EP-A- 0 505 218
- EP-A- 1 785 580
- DE-A1-102004 059 703
- DE-U1- 8 815 575
- GB-A- 2 395 103
- US-A- 4 670 148
- US-A1- 2007 243 023

## Description

The present invention relates to a method for stimulating biodegradation and the degassing of waste disposal sites by installing degassing pipes therein. The present invention further relates to a special waste disposal site.

Waste disposal sites are widely known. Such waste disposal sites are often situated on wasteland, on which a sealing layer may be installed before waste is deposited thereon. Such a sealing layer functions to prevent pollution of the soil and the ground water. It is a known fact that in such waste disposal sites the organic waste will decompose into all kinds of gases, mainly consisting of methane and carbon dioxide, as a result of a natural composting process that takes place. The gas thus formed slowly finds its way into the environment, which, in the case of methane gas, can be regarded as harmful to the environment. In practice the gas can be captured by means of a pipe system, for example, which captured gas, after possible refinement thereof, is used for energy recovery. A good and rapid decomposition of the organic material during the operational phase of these capturing systems is important with a view to preventing gases from being released into the atmosphere yet during a subsequent phase or organic materials from being leached out and contaminating the soil and the ground water. Trapped percolate may also be released after the operational phase of the disposal site and contaminate the soil and the ground water.

GB 2 395 103 relates to an apparatus for forming a column arrangement in the ground, the apparatus comprising a drivable member selectively mountable in an elongate sleeve member such that a part of the drivable member extends below the sleeve member so that the drivable member and sleeve member when mounted together can be driven into the ground, the drivable member can subsequently be dismounted from the sleeve member and removed, and the sleeve member can thereafter be removed from the ground. In use a stack would be wind driven to create an air flow through a duct which is located just below the surface of the ground and is formed from a number of modular units, formed from polypropylene and comprises an outer impermeable skin with an open structure therein providing the unit with high permeability. This air flow causes below ambient pressure in the duct which causes gas to be pulled through the columns and hence causes gas from the ground to be dispersed into the duct and out through a cowl into the atmosphere. The gas from the ground is diluted with air entering through the bollard.

The present inventor has found that "active" and "non-active" regions exist within such a waste disposal site, in which connection the term "activity" must be regarded in the light of the composting or fermentation behaviour. In the so-called "active" regions, a spontaneous fermentation reaction of organic components occurs, resulting in the formation of methane gas, among other fermentation products. In the "non-active" regions, little if any decomposition of organic components occurs. Although a waste disposal site as such comprises a combination of non-organic waste and organic waste, the absence of a fermentation reaction in certain regions of the waste disposal site is not desirable. Accordingly it is an object of the present invention to increase the extent of biodegradation as well as the extent of degassing of a waste disposal site.

The present invention as described in the opening paragraph is a method for stimulating biodegradation and the degassing of waste disposal sites in accordance with claim 1, and a waste disposal site in accordance with claim 13.

The above object can be accomplished by using such a method. It has in particular been found to be possible to have the entire waste disposal site take an active part in the decomposition and the gas production by installing the drainage pipes directly in the waste disposal site, in closely spaced relationship, rather than using a more common method as known from US patent No. 4,670,148, according to which shafts are first dug, spaced much further apart, whereupon one or more degassing pipes are installed in the shafts. According to the present invention it is thus possible to install drainage pipes a relatively short distance apart, preferably 1-7 metres, in the waste disposal site, so that the isolated regions in the waste disposal site can be opened up by placing such regions into communication with each other within the waste disposal site. As a result, excess (percolate) water can more easily spread to drier regions in the waste disposal site so as to locally increase the bioactivity in said regions and the gas that has formed can more easily migrate. Trapped water can also migrate to the surface via the drainage pipe when placed under tension as a result of consolidation of the disposal site under its own weight.

Using the present method, it has also been found to be possible to obtain a rapid and efficient settlement or consolidation of the waste disposal site. In addition to that it has been found to be possible, using the present method, to effect the discharge of percolate into the drainage system that is already present in the ground at the waste disposal site. Waste disposal sites often comprise horizontal layers which are not very permeable to water, which layers prevent percolate from draining in downward direction, causing the percolate to be trapped or draining from the waste disposal site on the sides thereof, which is undesirable. By using the present method, according to which drainage pipes are directly installed in vertical direction in the waste disposal site, a more or less free passage for vertical transportation of gas as well as (percolate) water is created by the use of such vertical drainage pipes. The term "in vertical direction" is to be understood to means up to an angle of at least 45° relative to the surface level. This means that the vertical drainage pipes can be installed in an inclined manner. As a result of the shorter distance apart between the pipes, the vertical drainage pipes are also in communication with each other at several locations via horizontal waste layers that are permeable to water and/or gas.

The drainage pipe used in the present method is preferably made up of a prefabricated, flexible section, which section is surrounded by a filter material at the outer circumference thereof. Said filter material is designed so that clogging thereof by soil particles is prevented, whilst the filter material is sufficiently permeable to liquid and gas, so that vertical transportation of liquid and gas via the drainage pipe is possible. The drainage pipe is open at both ends. Polypropylene and polyethylene are suitable materials in this regard.

With the drainage pipes installed in vertical direction in the waste disposal site, a pipe system is connected to the drainage pipes present at the surface of the waste disposal site, which pipe system functions to discharge the gases that have formed in the waste disposal site via the drainage pipes. The drainage pipes and/or the discharge pipes of the aforesaid drainage system can blend into a closed pipe system at some distance below the surface of the waste of the waste disposal site, which closed system discharges the gases that have formed in the waste disposal side to the outside. This is necessary in order to prevent the escape of gas to the surface and the ingress of air from the surface. In addition to that it has also been found to be possible to use such pipes and drainage pipes for transporting water or percolate to the waste disposal site itself, for the transportation of which water a certain overpressure may be used. In this way inactive regions of the disposal site that are too dry can be activated. Such an aqueous flow may also contain micro bacteria, which can generate bioactivity in the waste disposal site.

The method is combined with the use of a top seal on the waste disposal site, so that the escape of undesirable gases into the atmosphere and the ingress of oxygen into the gas discharge system from the surface is minimized. Materials suitable for use in top seals include mineral sealing materials, such as clay, clay/sand mixtures and bentonite/polymer mixtures, such as the mixtures according to European patent Nos. 0 682 684; 1 012 214; 1 250 494; 1 265 973 and 1 985 586, or plastic materials, such as foil materials. The aforesaid European patents are registered in the name of the present applicant. The pipe system that is used is preferably installed entirely or partially under the top seal, so that the number of passages through the sealing layer itself can be limited to the joined/combined pipes. Moreover, the pipe system under the sealing layer need not be closed, and in addition to being capable of discharging gas from the vertical drainage pipes, the pipe system is also capable of draining the gas that builds up in the layer present under the sealing layer. Instead of using a pipe system under the sealing layer, to which all vertical drainage pipes are individually connected, it is also possible when using this embodiment to replace the pipe system partially or entirely by, for example, a drainage system selected from a layer of a porous material or channels of a porous material, or a drainage mat. In such systems, the gas both from the vertical drainage pipes and from the surface of the waste can collect in porous cavities or channels in the drainage layer. This system is used in combination with a pipe system which discharges the gas in the drainage layer via closed pipes through the sealing layer or top seal. Substituting closed pipes for draining systems as described above has the advantage that condensation can lead to the formation of water seals, with the pipe not exhibiting a fall (any more), so that the gas cannot flow through the pipe any more. Likewise, percolate water can migrate upwards through the vertical drainage under the influence of the pressure of the weight of the disposal site and block the passage of the gas through the closed pipes. In the porous drainage layer, the gas exiting from the waste disposal site is collected and discharged collectively rather than via the individual drainage pipes.

In a special embodiment of the present method, a mineral sealing layer is provided as the top seal of the waste disposal site, which layer will become sufficiently gas-tight upon being saturated with water. Preferably, a ballast layer is provided on top of said layer, which ballast layer must be sufficiently thick to prevent dehydration of and damage to the sealing layer. Such a mineral sealing layer allows any excess gas pressure to pass but recovers after said passage on account of its self-recovery capacity and its weight. As a result of the provision of a large number of drainage pipes, a large amount of gas may spontaneously come to the surface at a several locations. A mineral layer which is relatively dry upon being provided will first transmit gas but form a seal once it becomes saturated with water. An example of a mineral material which is relatively dry upon being provided but which is quite capable of retaining water is a material as disclosed in one of the aforesaid patents in the name of the present applicant. Using welding of foils as a sealing layer, which is often done in practice, is dangerous in the presence of landfill gases which collect under the foil and which may explode. An excessive gas pressure may lift and cause damage to the entire foil structure.

In a special embodiment of the present method, a bioactive top layer is provided as the top seal of the waste disposal site, in which layer the micro-organisms convert the harmful methane gases and odour components being emitted into CO2 and water as a result of the availability of oxygen. To achieve an effective reduction of methane emissions, it must be ensured that the methane finds its way into the top layer in a balanced manner. If a sealing layer is not used for reducing the methane emissions and spreading them over the surface, it is desirable to use a distribution layer. Said distribution layer distributes the methane being supplied from the waste package of the waste disposal site to the top layer.

To install the present, already prefabricated drainage pipes directly in vertical direction in the waste disposal site, this is carried out by using a hollow guide lance, which lance, with the drainage pipe present therein, is pressed vertically downwards into the waste disposal site. When the lance is pressed into the waste disposal site, the bottom side of the lance is provided with a plate to which the drainage pipe is attached, which plate displaces the waste material in the waste disposal site and which will remain behind at the installation depth in the waste disposal site when the lance is removed from the waste disposal site for subsequently installing a new drainage pipe at another location at the waste disposal site.

To achieve an efficient extraction of gas from the waste disposal site it is desirable that the pipe system be configured so that an underpressure can be generated in drainage pipes installed in the waste disposal site and/or the pipe system present under the seal.

The present invention thus relates to the use of drainage pipes installed in vertical direction in waste disposal sites for degassing the waste disposal site. The present invention further relates to the use of drainage pipes installed in vertical direction in waste disposal sites for aiding in the settlement of the waste disposal site.

The present invention in particular relates to the activation of the entire waste disposal site for the purpose of thus taking part in the active decomposition and gas production, wherein the previously non-active parts are opened up to water and gas. According to the method of the present invention it is also possible to supply water to the drainage pipes, so that a discharge of soluble and/or mobile non-degradable harmful substances to the percolate drain at the bottom of the waste disposal site can take place in the waste disposal site, so that a less harmful waste disposal site will remain. The percolate thus obtained can be pumped out and be subjected to a purification treatment. Using the present method it has thus been found to be possible to increase the overall gas yield of a waste disposal site, thus realising not only a more rapid gas yield but also a more complete biodegradation of the waste disposal site itself.

## Claims

1. A method for stimulating biodegradation and the degassing of waste disposal sites by installing degassing pipes therein, the method comprising the following steps:
installing prefabricated drainage pipes in the waste disposal site, by pressing a hollow guide lance, in which hollow guide lance the prefabricated drainage pipe is present, in vertically downward direction into the waste disposal site, the bottom side of said lance being provided with a plate to which the drainage pipe is attached, which plate displaces the waste material in the waste disposal site and which will remain behind in the waste disposal site when the lance is removed from the waste disposal site at the depth at which the drainage pipe is installed in the bottom of the waste disposal site, and
installing a drainage layer on the waste present at the surface of the waste disposal site, wherein the gas both from the vertical drainage pipes and from the surface of the waste is collected in porous cavities or channels in the drainage layer, and
installing a top seal for gas and water on top of said drainage layer for preventing escape of gases into the atmosphere and the ingress of oxygen into said gas discharge system, and
installing a pipe system which discharges the gas in the drainage layer via closed pipes through said top seal to the outside, wherein said pipe system is located above the waste present at the surface of the waste disposal site or directly below the surface of said waste.

2. A method according to claim 1, **characterised in that** a prefabricated, flexible plastic section is used as a drainage pipe, which section is surrounded by a filter material at the outer circumference thereof, wherein especially said filter material comprises thermally bound polypropylene fibres.

3. A method according to any one of the preceding claims, **characterised in that** the drainage pipes are installed at a vertical level of less than 4 metres from the bottom seal of the waste disposal site, preferably that the drainage pipes are installed in the waste disposal site at a depth such that the drainage pipes form a connection with the drainage system that is already present in the waste disposal site.

4. A method according to one or more of the preceding claims, **characterised in that** the drainage layer under the top seal is partially or entirely substituted for a pipe system wherein the drainage pipes are interconnected via a pipe system located above the waste present at the surface of the waste disposal site or directly below the surface of said waste, especially that said pipe system is partially or entirely located under the top seal of the waste disposal site.

5. A method according to one or more of the preceding claims, **characterised in that** the top seal comprises a layer of mineral sealing material, wherein the drainage layer is selected from a layer of a porous material, a drainage mat and a drainage channel of a porous material

6. A method according to one or more of the preceding claims, **characterised in that** the vertical drainage pipes are installed in the waste disposal site at a distance of 1-7 meters from each other.

7. A method according to one or more of the preceding claims, **characterised in that** the drainage layer is so configured that an underpressure is generated in said drainage layer.

8. A method according to one or more of the preceding claims, **characterised in that** the pipe system is so configured that an underpressure is generated in said drainage pipes installed in the waste disposal site.

9. A method according to one or more of the preceding claims, **characterised in that** water can be supplied to the drainage pipes.

10. A method according to claim 9, **characterised in that** said water is supplied to the drainage pipes for a discharge of soluble and/or mobile non-degradable harmful substances to a percolate drain at the bottom of the waste disposal site wherein the percolate thus obtained is pumped out.

11. A method according to one or more of the preceding claims, **characterised in that** as said top seal a bioactive top layer is provided at the surface of the waste disposal site, in which the micro-organisms present therein convert the methane gases and odour components being emitted from the waste disposal site into C02 and water as a result of the availability of oxygen.

12. A method according to one or more of the preceding claims, **characterised in that** the drainage pipes are installed in the waste disposal site at an angle of at least 45° relative to the surface level.

13. A waste disposal site provided with regularly spaced-apart, prefabricated drainage pipes installed in vertical direction in said waste disposal site, wherein plates are located at the installation depth of said prefabricated drainage pipes in said waste disposal site, wherein on the waste present at the surface of the waste disposal site a drainage layer is present, wherein on top of said drainage layer a top seal for gas and water is present for preventing escape of gases into the atmosphere and the ingress of oxygen into said gas discharge system, wherein the gas both from the vertical drainage pipes and from the surface of the waste can collect in porous cavities or channels in the drainage layer, and a pipe system which discharges the gas in the drainage layer via closed pipes through the top seal to the outside, said pipe system being located above the waste present at the surface of the waste disposal site or directly below the surface of said waste.

14. A waste disposal site according to claim 13, **characterised in that** the drainage layer under the top seal is partially or entirely substituted for a pipe system wherein the drainage pipes are interconnected via said pipe system located above the waste present at the surface of the waste disposal site or directly below the surface of said waste, especially that said pipe system is partially or entirely located under the top seal of the waste disposal site.

15. A waste disposal site according to any one of claims 13-14, **characterised in that** said top seal comprises a layer of mineral sealing material, especially that said top seal comprises a bioactive top layer in which layer microorganisms convert methane gases and odour components being emitted, wherein said drainage layer is selected from a layer of a porous material, a drainage mat and a drainage channel of a porous material, in which drainage layer said drainage pipes installed in vertical direction terminate.

16. A waste disposal site according to one or more of claims 13-15, **characterised in that** the vertical drainage pipes are spaced 1-7 meters apart in the waste disposal site.

17. Use of drainage pipes installed in vertical direction in a waste disposal site according to one or more of claims 13-16 for stimulating the biodegradation and degassing of said waste disposal site, especially for consolidating said waste disposal site.

18. Use of drainage pipes installed in vertical direction in a waste disposal site according to one or more of claims 13-16 for distributing water in said waste disposal site for the purpose of in creating bioactivity and forming channels for displacing gases in said waste disposal site.

## Patentansprüche

1. Verfahren zur Stimulierung des biologischen Abbaus und der Entgasung von Mülldeponien durch Installation von Entgasungsrohren darin, wobei das Verfahren die folgenden Schritte umfasst:
Installation vorgefertigter Entwässerungsrohre in der Mülldeponie durch Pressen einer hohlen Führungslanze, in der sich das vorgefertigte Entwässerungsrohr befindet, in vertikaler Richtung nach unten in die Mülldeponie, wobei die Unterseite der Lanze mit einer Platte versehen ist, an der das Entwässerungsrohr befestigt ist, wobei die Platte den Abfall auf der Mülldeponie verschiebt und nach Entfernung der Lanze aus der Mülldeponie in der Tiefe, in der das Entwässerungsrohr am Boden der Mülldeponie installiert ist, verbleibt, und
Installation einer Entwässerungsschicht auf dem Abfall auf der Oberfläche der Mülldeponie, wobei das Gas sowohl aus den vertikalen Entwässerungsrohren als auch von der Oberfläche des Abfalls in porösen Hohlräumen oder Kanälen in der Entwässerungsschicht gesammelt wird, und
Installation einer oberen Abdichtung für Gas und Wasser auf der Oberseite der Entwässerungsschicht, um das Entweichen von Gasen in die Atmosphäre und das Eindringen von Sauerstoff in das Gasableitungssystem zu verhindern, und
Installation eines Rohrsystems, welches das Gas in der Entwässerungsschicht über geschlossene Rohre durch die obere Abdichtung nach außen ableitet, wobei sich das Rohrsystem oberhalb des Abfalls auf der Oberfläche der Mülldeponie oder direkt unterhalb der Oberfläche des Abfalls befindet.

2. Verfahren nach Anspruch 1, **dadurch gekennzeichnet, dass** als Entwässerungsrohr ein vorgefertigtes, flexibles Kunststoffprofil verwendet wird, wobei das Profil an seinem Außenumfang von einem Filtermaterial umgeben ist, wobei das Filtermaterial insbesondere thermisch gebundene Polypropylenfasern umfasst.

3. Verfahren nach einem der vorangegangenen Ansprüche, **dadurch gekennzeichnet, dass** die Entwässerungsrohre in einer vertikalen Ebene von weniger als 4 Metern von der unteren Abdichtung der Mülldeponie installiert werden, vorzugsweise dadurch, dass die Entwässerungsrohre in der Mülldeponie in einer Tiefe installiert werden, in der sie eine Verbindung zu dem bereits in der Mülldeponie vorhandenen Entwässerungssystem bilden.

4. Verfahren nach einem oder mehreren der vorangegangenen Ansprüche, **dadurch gekennzeichnet, dass** die Entwässerungsschicht unter der oberen Abdichtung teilweise oder vollständig ein Rohrsystem ersetzt, wobei die Entwässerungsrohre über ein Rohrsystem miteinander verbunden sind, das sich oberhalb des Abfalls auf der Oberfläche der Mülldeponie oder direkt unterhalb der Oberfläche des Abfalls befindet, insbesondere dass sich das Rohrsystem teilweise oder vollständig unter der oberen Abdichtung der Mülldeponie befindet.

5. Verfahren nach einem oder mehreren der vorangegangenen Ansprüche, **dadurch gekennzeichnet, dass** die obere Abdichtung eine Schicht aus einem mineralischen Dichtungsmaterial umfasst, wobei die Entwässerungsschicht aus einer Schicht eines porösen Materials, einer Drainagematte und einem Entwässerungskanal aus einem porösen Material ausgewählt ist.

6. Verfahren nach einem oder mehreren der vorangegangenen Ansprüche, **dadurch gekennzeichnet, dass** die vertikalen Entwässerungsrohre in der Mülldeponie in einem Abstand von 1 bis 7 Metern voneinander installiert werden.

7. Verfahren nach einem oder mehreren der vorangegangenen Ansprüche, **dadurch gekennzeichnet, dass** die Entwässerungsschicht so gestaltet ist, dass in der Entwässerungsschicht ein Unterdruck entsteht.

8. Verfahren nach einem oder mehreren der vorangegangenen Ansprüche, **dadurch gekennzeichnet, dass** das Rohrsystem so gestaltet ist, dass in den in der Mülldeponie installierten Entwässerungsrohren ein Unterdruck entsteht.

9. Verfahren nach einem oder mehreren der vorangegangenen Ansprüche, **dadurch gekennzeichnet, dass** Wasser in die Entwässerungsrohre geleitet werden kann.

10. Verfahren nach Anspruch 9, **dadurch gekennzeichnet, dass** Wasser in die Entwässerungsrohre geleitet wird, um lösliche und/oder mobile nichtabbaubare schädliche Substanzen in einen Perkolatkanal am Boden der Mülldeponie abzuleiten, aus dem das so erhaltene Perkolat herausgepumpt wird.

11. Verfahren nach einem oder mehreren der vorangegangenen Ansprüche, **dadurch gekennzeichnet, dass** als obere Abdichtung eine bioaktive Deckschicht auf der Oberfläche der Mülldeponie bereitgestellt wird, in der die darin vorliegenden Mikroorganismen die aus der Mülldeponie austretenden Methangase und Geruchskomponenten aufgrund der Verfügbarkeit von Sauerstoff in CO₂ und Wasser umwandeln.

12. Verfahren nach einem oder mehreren der vorangegangenen Ansprüche, **dadurch gekennzeichnet, dass** die Entwässerungsrohre in der Mülldeponie in einem Winkel von mindestens 45°, bezogen auf das Oberflächenniveau, installiert werden.

13. Mülldeponie, die mit regelmäßig voneinander beabstandeten vorgefertigten Entwässerungsrohren versehen ist, die in vertikaler Richtung in der Mülldeponie installiert sind, wobei sich in der Installationstiefe der vorgefertigten Entwässerungsrohre in der Mülldeponie Platten befinden, wobei auf dem Abfall auf der Oberfläche der Mülldeponie eine Entwässerungsschicht vorliegt, wobei auf der Oberseite der Entwässerungsschicht eine obere Abdichtung für Gas und Wasser vorliegt, um ein Entweichen von Gasen in die Atmosphäre und das Eindringen von Sauerstoff in das Gasableitungssystem zu verhindern, wobei das Gas sowohl aus den vertikalen Entwässerungsrohren als auch von der Oberfläche des Abfalls in porösen Hohlräumen oder Kanälen in der Entwässerungsschicht gesammelt werden kann, sowie mit einem Rohrsystem, welches das Gas in der Entwässerungsschicht über geschlossene Rohre durch die obere Abdichtung nach außen ableitet, wobei sich das Rohrsystem oberhalb des Abfalls auf der Oberfläche der Mülldeponie oder direkt unterhalb der Oberfläche des Abfalls befindet.

14. Mülldeponie nach Anspruch 13, **dadurch gekennzeichnet, dass** die Entwässerungsschicht unter der oberen Abdichtung teilweise oder vollständig ein Rohrsystem ersetzt, wobei die Entwässerungsrohre über das Rohrsystem miteinander verbunden sind, das sich oberhalb des Abfalls auf der Oberfläche der Mülldeponie oder direkt unterhalb der Oberfläche des Abfalls befindet, insbesondere dass sich das Rohrsystem teilweise oder vollständig unter der oberen Abdichtung der Mülldeponie befindet.

15. Mülldeponie nach einem der Ansprüche 13 und 14, **dadurch gekennzeichnet, dass** die obere Abdichtung eine Schicht aus einem mineralischen Dichtungsmaterial umfasst, insbesondere eine bioaktive Deckschicht, in der Mikroorganismen austretende Methangase und Geruchskomponenten umwandeln, wobei die Entwässerungsschicht aus einer Schicht eines porösen Materials, einer Drainagematte und einem Entwässerungskanal aus einem porösen Material ausgewählt ist, wobei in der Entwässerungsschicht die in vertikaler Richtung installierten Entwässerungsrohre enden.

16. Mülldeponie nach einem oder mehreren der Ansprüche 13 bis 15, **dadurch gekennzeichnet, dass** die vertikalen Entwässerungsrohre in der Mülldeponie 1 bis 7 Meter voneinander beabstandet sind.

17. Verwendung von in einer Mülldeponie in vertikaler Richtung installierten Entwässerungsrohren nach einem oder mehreren der Ansprüche 13 bis 16 zur Stimulierung des biologischen Abbaus und der Entgasung der Mülldeponie, insbesondere zur Konsolidierung der Mülldeponie.

18. Verwendung von in einer Mülldeponie in vertikaler Richtung installierten Entwässerungsrohren nach einem oder mehreren der Ansprüche 13 bis 16 zur Verteilung von Wasser in der Mülldeponie zum Zwecke der Erzeugung von Bioaktivität und Bildung von Kanälen zur Verdrängung von Gasen in der Mülldeponie.

## Revendications

1. Procédé pour stimuler la biodégradation et le dégazage de sites d'élimination des déchets en installant des conduites de dégazage dedans, le procédé comprenant les étapes suivantes qui consistent :
à installer des conduites de drainage préfabriquées dans le site d'élimination des déchets, en appuyant sur une lance de guidage creuse, dans cette lance de guidage creuse la conduite de drainage préfabriquée est présente, dans une direction verticalement vers le bas dans le site d'élimination des déchets, le côté inférieur de ladite lance étant muni d'une plaque à laquelle la conduite de drainage est fixée, laquelle plaque déplace les déchets dans le site d'élimination des déchets et qui restera en arrière dans le site d'élimination des déchets lorsque la lance est retirée du site d'élimination des déchets à la profondeur à laquelle la conduite de drainage est installée au fond du site d'élimination des déchets, et
à installer une couche de drainage sur les déchets présents au niveau de la surface du site d'élimination des déchets, où le gaz provenant à la fois des conduites de drainage verticales et de la surface des déchets est collecté dans des cavités poreuses ou des canaux poreux dans la couche de drainage, et
à installer un joint supérieur pour le gaz et l'eau au-dessus de ladite couche de drainage pour empêcher la fuite de gaz dans l'atmosphère et l'entrée d'oxygène dans ledit système d'évacuation de gaz, et
à installer un système de conduites qui évacue le gaz dans la couche de drainage par des conduites fermées à travers ledit joint supérieur vers l'extérieur, où ledit système de conduites est situé au-dessus des déchets présents au niveau de la surface du site d'élimination des déchets ou directement en dessous de la surface desdits déchets.

2. Procédé selon la revendication 1, **caractérisé en ce qu'**une section plastique flexible, préfabriquée est utilisée en tant que conduite de drainage, laquelle section est entourée d'un matériau filtrant au niveau de sa circonférence externe, où en particulier ledit matériau filtrant comprend des fibres de polypropylène liées thermiquement.

3. Procédé selon l'une quelconque des revendications précédentes, **caractérisé en ce que** les conduites de drainage sont installées à un niveau vertical inférieur à 4 mètres du joint inférieur du site d'élimination des déchets, de préférence **en ce que** les conduites de drainage sont installées dans le site d'élimination des déchets à une profondeur telle que les conduites de drainage forment une liaison avec le système de drainage qui est déjà présent dans le site d'élimination des déchets.

4. Procédé selon une ou plusieurs des revendications précédentes, **caractérisé en ce que** la couche de drainage sous le joint supérieur remplace partiellement ou totalement un système de conduites où les conduites de drainage sont reliées entre elles par l'intermédiaire d'un système de conduites situé au-dessus des déchets présents au niveau de la surface du site d'élimination des déchets ou directement en dessous de la surface desdits déchets, en particulier **en ce que** ledit système de conduites est partiellement ou totalement situé sous le joint supérieur du site d'élimination des déchets.

5. Procédé selon une ou plusieurs des revendications précédentes, **caractérisé en ce que** le joint supérieur comprend une couche de matériau d'étanchéité minéral, où la couche de drainage est choisie parmi une couche d'un matériau poreux, d'un tapis drainant et d'un canal de drainage d'un matériau poreux.

6. Procédé selon une ou plusieurs des revendications précédentes, **caractérisé en ce que** les conduites de drainage verticales sont installées dans le site d'élimination des déchets à une distance de 1 à 7 mètre(s) les unes des autres.

7. Procédé selon une ou plusieurs des revendications précédentes, **caractérisé en ce que** la couche de drainage est configurée de sorte qu'une sous-pression soit générée dans ladite couche de drainage.

8. Procédé selon une ou plusieurs des revendications précédentes, **caractérisé en ce que** le système de conduites est configuré de sorte qu'une sous-pression soit générée dans lesdites conduites de drainage installées dans le site d'élimination des déchets.

9. Procédé selon une ou plusieurs des revendications précédentes, **caractérisé en ce que** l'eau peut être fournie aux conduites de drainage.

10. Procédé selon la revendication 9, **caractérisé en ce que** ladite eau est fournie aux conduites de drainage pour une évacuation de substances nocives non dégradables mobiles et/ou solubles à un drain de percolat au fond du site d'élimination de déchets où le percolat ainsi obtenu est évacué par pompage.

11. Procédé selon une ou plusieurs des revendications précédentes, **caractérisé en ce que** comme ledit joint supérieur, une couche supérieure bioactive est prévue au niveau de la surface du site d'élimination des déchets, où les micro-organismes présents dedans transforment les gaz méthane et les composants odorants qui sont émis à partir du site d'élimination des déchets en CO₂ et en eau en raison de la disponibilité de l'oxygène.

12. Procédé selon une ou plusieurs des revendications précédentes, **caractérisé en ce que** les conduites de drainage sont installées dans le site d'élimination des déchets à un angle d'au moins 45° par rapport au niveau de surface.

13. Site d'élimination des déchets muni de conduites de drainage préfabriquées, régulièrement espacées installées dans une direction verticale dans ledit site d'élimination des déchets, où des plaques sont situées à la profondeur d'installation desdites conduites de drainage préfabriquées dans ledit site d'élimination des déchets, où sur les déchets présents au niveau de la surface du site d'élimination des déchets, une couche de drainage est présente, où au sommet de ladite couche de drainage, un joint supérieur pour le gaz et l'eau est présent pour empêcher la fuite de gaz dans l'atmosphère et l'entrée d'oxygène dans ledit système d'évacuation de gaz, où le gaz provenant à la fois des conduites de drainage verticales et de la surface des déchets peut être collecté dans des cavités poreuses ou des canaux poreux dans la couche de drainage, et un système de conduites qui évacue le gaz dans la couche de drainage par des conduites fermées à travers ledit joint supérieur vers l'extérieur, ledit système de conduites étant situé au-dessus des déchets présents au niveau de la surface du site d'élimination des déchets ou directement en dessous de la surface desdits déchets.

14. Site d'élimination des déchets selon la revendication 13, **caractérisé en ce que** la couche de drainage sous le joint supérieur remplace partiellement ou totalement un système de conduites où les conduites de drainage sont reliées entre elles par l'intermédiaire dudit système de conduites situé au-dessus des déchets présents au niveau de la surface du site d'élimination des déchets ou directement en dessous de la surface desdits déchets, en particulier en ce que ledit système de conduites est partiellement ou totalement situé sous le joint supérieur du site d'élimination des déchets.

15. Site d'élimination des déchets selon l'une quelconque des revendications 13 et 14, **caractérisé en ce que** ledit joint supérieur comprend une couche de matériau d'étanchéité minéral, en particulier **en ce que** ledit joint supérieur comprend une couche supérieure bioactive où les micro-organismes de couche transforment les gaz méthane et des composants odorants qui sont émis, où ladite couche de drainage est choisie parmi une couche d'un matériau poreux, d'un tapis drainant et d'un canal de drainage d'un matériau poreux, dans cette couche de drainage, lesdites conduites de drainage installées dans la direction verticale se terminent.

16. Site d'élimination des déchets selon une ou plusieurs des revendications 13 à 15, **caractérisé en ce que** les conduites de drainage verticales sont espacées de 1 à 7 mètre(s) dans le site d'élimination des déchets.

17. Utilisation de conduites de drainage installées dans une direction verticale dans un site d'élimination des déchets selon une ou plusieurs des revendications 13 à 16 pour stimuler la biodégradation et le dégazage dudit site d'élimination des déchets, en particulier pour consolider ledit site d'élimination des déchets.

18. Utilisation de conduites de drainage installées dans une direction verticale dans un site d'élimination des déchets selon une ou plusieurs des revendications 13 à 16 pour distribuer de l'eau dans ledit site d'élimination des déchets dans le but de créer la bioactivité et former des canaux pour le déplacement de gaz dans ledit site d'élimination des déchets.
